# EUROPEAN PATENT APPLICATION

(11) **EP 3 305 384 A1**
(43) Date of publication of application: **11.04.2018**
(21) Application number: 16798068.9
(22) Date of filing: 03.06.2016
(51) Int. Cl.: A63F 13/843, A63F 13/46, A63F 13/352

(54) **METHOD AND SYSTEM FOR PROVIDING GOAL ATTAINMENT ONLINE SPEED QUIZ GAME**

(30) Priority: 08.06.2015 KR 20150080668
(71) Applicant: KSeek Co., Ltd., Daejeon 35234 (KR)
(72) Inventor: KIM, Young Real, Daejeon 34127 (KR); KIM, Jusang, Daejeon 34127 (KR)
(74) Representative: Ter Meer Steinmeister & Partner
(86) International application number: PCT/KR2016/005892
(87) International publication number: WO 2016/200097

(57) **Abstract**

According to an embodiment of the present invention so as to accomplish the objects, there is provided to an online speed quiz game providing method and system capable of progressing a speed quiz game of competition among individuals or teams for a plurality of quiz solution participants. A plurality of quiz solution participants makes the plural teams so as to perform a mission game based on the speed quiz game and a quiz server sets the right answer in advance, receives answers from participation terminals of the plurality of quiz solution participants who has to solve a quiz during a limited time, determines whether the received answers satisfy the established right answer or not, estimates the achievement of a quiz step from the scoring result, determining the quiz result whether the achievement achieves the specific goal value, and reflects such quiz result to a specific person or a specific team. That is, it receives the answer of the quiz solution participants so as to perform the progress and the scoring of the quiz game and analyze the scoring result to be frequently announced.

## Description

### Technical Field

The present invention relates to a method or a system in which a quiz server connected to participation terminals and operation terminals through a network provides a speed quiz game to a plurality of online users and, more specifically, to a goal achievement online speed quiz game providing method and system for a plurality of users in which when an operation terminal transmits a right answer and a goal to be achieved, a quiz server sets the right answer and a purpose, receives answers from participation terminals used by a plurality of quiz solution participants, determines whether the received answers satisfy the right answer or not, estimates the achievement of a quiz step from at least one of the number of persons with right answer, the number of persons with wrong answer, the number of wrong answer times, and the acquired points, determines success or failure of the quiz result in accordance with whether a numerical value or a ratio of the achievement achieves the goal or not, and reflects such quiz result to a specific person or a specific team.

In the whole specification, a 'participation terminal' can send and receive data over a network with a quiz server and is a terminal used by quiz solution participants or quiz game participants. The participation terminal includes any one hardware system of a PC, a mobile phone, a tablet PC, and a dedicated terminal and a software executed by merging with the hardware system. The participation terminal further includes an output device such as a display or speaker etc. Also, it can be used as a function capable of outputting the progress of the quiz or the final result thereof.

In the whole specification, an 'operation terminal' serves to receive the data such as right answers on the quiz, achievable goals, and a time limit etc., transmit the corresponding data to the quiz server through a quiz operator, and give signals of the quiz start and the quiz end. The operation terminal includes any one hardware system of a PC, a mobile phone, a tablet PC, and a dedicated terminal and a software executed by merging with the hardware system. The operation terminal further includes an output device such as a display or speaker etc. Also, it can be used as a function capable of outputting the progress of the quiz or the final result thereof.

In the whole specification, the 'quiz server' is a server system for operating the quiz game on the quiz participant and serves to set the quiz answers, the goals, and the time limit and provide the quiz game service to the quiz game participants and the quiz solution participants based on the set data.

In the whole specification, the 'goal', which is a component of the quiz game, is information capable of writing in the number of persons who guess the answer or get the wrong answer or in the ratio of the number for quiz connecting person contrast in case of receiving the answers related to the quiz of targeting the quiz solution participants.

In the whole specification, the 'quiz solution participant' refers to the person of inputting the answer on the quiz by using the participation terminal.

In the whole specification, the 'quiz game participant' is the participant taking part in the quiz game and may be specific individuals or teams composed of multiple persons. One quiz game participant may qualify as the quiz solution participant at the same time.

In the whole specification, the 'quiz operator' refers to a person of determining and conducting the progress of the online quiz game by using the operation terminal.

In the whole specification, the 'quiz' refers to a shape designed to give scores or profits to the persons directly involved or concerned or teams in a case that it gets the right answer required by the question thereof. Here, it is not simply defined as the quiz solution and the answer. That is, the quiz solution may be a specific mission conducted by the specific participant or team and the answer may be a result conducted the specific mission. The quiz may be includes the meaning of judging the answers on instructions, hints, and unilateral explanations based on predetermined right answers.

In the whole specification, the 'right answer' may be a specific answer established in advance. However, in case of a mission performance, it may be include the answer of a condition type set to a condition of recognizing as a right answer.

### Background Art

Typically, in an online game quiz, the quiz server and the participation terminal are connected to each other through a network. That is, the quiz serve presents the quiz solutions to the participation terminal, the quiz participant inputs the quiz answer, the participation terminal makes data processing based on the inputted answers and transmits them to the quiz server, the quiz server compares the received answers with the predetermined answer to be scored, and then it adds and subtracts the scores for the specific person or the specific team or reflects the change of qualification for participation based on the scoring results.

In this conventional online quiz game technology, it is generally performed in an asynchronous time, so that each of the acquired points are compared with those of the rest participated persons so as to induce competition between them. Or, it is synchronized during a specific time period so as to solve all quiz solutions and then, it scores the answers, so that it adds and subtracts the scores or decides the ranking thereof to be opened.

However, in the above asynchronous method, since anyone can easily find the right answer through the search owing to the widely used Internet and mobile phone, it is hard to operate the quiz game fairly. Moreover, even in case of the synchronous method, since a large number of participants take part in the quiz game, it is not suitable for providing the quiz services of achieve the fixed goal through the quick competition between individuals.

Also, in the conventional arts, in a situation that the personal mobile device and the networks are widely expanded worldwide, there is a limit to operate the quiz game as the relationship of the team while many people enjoy it at the same time. Furthermore, in the exiting arts, it is difficult to implement the speed quiz game service for achieving the given goals by solving the quizzes within the time limit under the participation of a lot of persons.

### Disclosure

### Technical Problem

The present invention is to provide a technical method capable of operating a goal achievement online speed quiz game which a plurality of people can simultaneously enjoy by using a PC, a mobile phone, or a dedicated terminal capable of transferring information by a relatively easy method through a communication network such as the Internet. In addition, the invention is to provide a system capable of easily operating the above quiz game.

For example of the quiz game of the concrete circumstances on the technical solution according to the present invention, in a state that three persons located on the stage explain a specific key word to other persons sat in the seats, the persons located in the audience input the answers so as to guess the answer and should achieve the designated goal value within the designated time limit. Here, the specific key word becomes the answer.

Three persons, who are the quiz game participants, located on the stage are ordered respectively and receive one random picture and can explain at least one manner among a gesture, a sound, an explanation, and a look on the word or the thing shown in the picture. The persons sat in the seats have the participation terminal and correspond to the quiz solution participants. The quiz solution participants analogize what the explainers describe and input the answers.

It can assume a case that a plurality of participants takes part in a quiz game of describing the specific word through the gesture so as to get the right answer by means of 300 persons sat in the seats. At this time, in the first round, it is determined that the number of the persons who gives the right answer is 10 and the time limit is 10 seconds. When the game participant explains the key word hard, if at least 10 persons input the right answer within 10 seconds, the challenger of explaining the quiz receives 10 scores. In the second round, when it is established that the time limit is 60 seconds, the goal value is 30%, and the success point is 30 scores, if 90 persons input the right answer within 60 seconds, it is judged as a success and the person of explaining the quiz can obtain 30 scores. At this time, the point is reflected to the person of explaining the picture assigned to himself on the stage In other words, there is a method of receiving the score due to the contribution of the explanation thereof.

In such a quiz game, the contribution can be operated contrariwise. In other words, other person attacks the person of explaining the quiz by intentionally assigning the quiz solution or induces the wrong answer through a confused comment, so that it is not allowed achieve the established goal. At this time, it is possible for the person of attacking the quiz solution or inducing the wrong answer to give the point according to the contribution thereof.

Secondly, it can assume a quiz game between teams case that it is divided into three different teams of 100 participants to be competed. At this time, in the first round, if it is determined that the number of the persons who gives the right answer is 10 and the time limit is 30 seconds, it can give the scores to the team in that at least 10 participants get the right answer within 30 second. This corresponds to the speed quiz game based on the cooperation within the team. That is, as though the teams have achieved the goal equally by producing 10 right answers within the time limit, it determines the orders of the achievement goal, thereby differently giving the scores to each team.

In such the quiz games, the persons play fun quiz games offline. However, a lot of persons have difficulty to participate in the quiz game at the same time. Therefore, the object of the present invention to be solved is to take part in the quiz game at the same time by means of a lot of persons and fairly proceed with the speed quiz games by taking advantage of online technologies.

### Technical solution

In order to solve the problems, the present invention is to provide an online speed quiz game providing method and system thereof capable of achieving the goals by means of a plurality of users. In order to operate the online speed quiz game service, it is necessary to firstly include a quiz server, an operation terminal, and a participation terminal etc. it is preferred that the quiz server and the operation terminal are operated independently to each other. However, in some cases, they can be configured as one system. All of the quiz solution participants should use his participation terminal. In case of the quiz server, one system is enough for the user less than a certain scale. In some cases, the quiz server can utilize the multiple server systems so as to handle the massive users. Also, it is necessary for multiple persons to use the operation terminal. Each participation terminal, each operation terminal and each quiz server are configured by software applications having the corresponding function to complete the invention.

Firstly, the quiz server is configured with dedicated applications for the quiz operation. The operation terminal and the participation terminal are configured with a combination of each terminal system and the separate application. The operation terminal and the participation terminal can include dedicated terminals designed specifically and a software merged therewith. Also, the operation terminal and the participation terminal can include widely-used system such as a smartphone, a mobile phone, a PC, a laptop PC, and a tablet PC etc. and applications thereof. In the latter case, only the application can be supplied.

A goal achievement online speed quiz game providing method according to an embodiment of the present invention in an online speed quiz game, which is provided to quiz solution participants who use participation terminals, includes a step of setting a right answer of a specific quiz; a step of receiving answers for the specific quiz from the participation terminals; a step of determining whether the received answers are the right answer; a step of calculating a cumulative value including at least one of the number of persons with right answer, the number of persons with wrong answer, the ratio of persons with right answer, the ratio of persons with wrong answer, the number of wrong answer times, and acquired points, and estimating achievement from the cumulative value; a step of determining, by the quiz server, a quiz result from whether the achievement achieves a specific goal; and a step of reflecting the quiz result to a specific person or a specific team. In addition, the method further includes a step of setting a time limit and a step of ending the reception of quiz answers and determining the quiz result when exceeding the time limit for the progressed quiz.

When the quiz solution participant inputs the answers such as voice, sound, gesture, touch, keyboard, image photographing, the participation terminal converts the input signal into the data and immediately transmits it to the server.

The quiz result is reflected on the specific person or the specific team by conducting at least one of methods such as score grant for a time limit related to goal achievement or for achievement and failure of a goal, score reduction, suspension of participation qualification, and restoration of participation qualification or disqualification of participation.

In the speed quiz game providing method, it further includes a step of determining the final ranking or winner from the scores accumulated in each step or the number of success and failure in the goal achievement etc. by repeating the quizzes of various steps. Also, it further includes a step of determining the final winner by selecting the final survivor or survival team.

### Advantageous Effects

The speed quiz game method based on online multi-users of the invention can operate a knowledge game in which a plurality of users can participate. In other words, countless viewers can simultaneously enjoy a TV show with the same quiz through TV broadcasting, and it is possible to provide an online team-based quiz game in which classes of a school compete their knowledge with each other through competition.

Also, the mobile phones and the PCs are widely diffused and the utilization of the wired and wireless networks is increased, so that more persons choose their teams through multimedia and enjoy the team-based quiz games, thereby being a help to recover identity and fellowship between them. Moreover, it can provide fairness of the games through the correct processing of the quiz server.

The TV quiz show for broadcast can proceed with the quiz game by means of the plural quiz game contestants and the viewers together. The quiz game contestant explains the quiz solution to the viewers so as to analogize the right answer and the viewer installs the quiz solution applications in his mobile phone and inputs the answer on the explanation of the contestant to be transmitted. The quiz server serves to calculate the result of the quiz step from at least any one of the number of persons with right answer, the number of persons with wrong answer, the number of wrong answer times, the ratio of right answers, the ratio of wrong answers, and the acquired points etc. through the procedure for getting the right answer received from the mobile phone. Here, if the ratio of wrong answers is many, it is judged as a failure to be eliminated. On the contrary, if the number of persons with right answer leads to a target value, it is judged as a success to be passed. The target values for the quiz game contestant can be raised through several steps in the quiz show.

The participant and the viewer, who participate in the quiz game show, make a common team so as to play a battle between teams.

### Brief Description of Drawings

The above and other objects, features and advantages of the present invention will be more apparent from the following detailed description taken in conjunction with the accompanying drawings, in which:
Figure 1 is a diagram illustrating a configuration of a goal achievement online speed quiz game system according to an embodiment of the present invention;
Figure 2 is a block diagram illustrating a configuration of a quiz server of Figure 1;
Figure 3 is a block diagram illustrating a configuration of a participation terminal of Figure 1; and
Figure 4 is a flow chart necessary for progressing a goal achievement online speed quiz by means of a quiz server of Figure 1.

### Best Mode

### Mode for Invention

Since the description of the present invention is a mere embodiment for structural and functional description, it must not be interpreted that the scope of the present invention is limited by the embodiments described in the text. That is, since the embodiments can be variously changed and have various forms, it should be understood that the scope of the invention includes the equivalents for realizing the technical concept. Also, since the specific embodiments do not include all objects and effects presented by the present invention, the scope of the present invention is not limited by them.

This invention can be implemented in many different forms without departing from technical aspects or main features.

Therefore, the implementation examples of this invention are nothing more than simple examples in all respects and will not be interpreted restrictively.

Even though the terms such as 1, 2, and others can be used to explain many components, the above components shall not be limited by the above terms.

The above terms are used only to distinguish one component from the other component.

For example, the first component can be named the second component without departing from the scope of rights in this invention. Similarly, the second component can be named the first component.

The term called "and/or" includes the combination of the plural described and related items or a certain item of the plural described and related items.

When it is mentioned to be "connected" or "linked" to the other component, a certain component may be connected or linked to the other component. However, it will be understood that there may be some other components between them.

On the other hand, when it is mentioned to be directly "connected" or "linked" to the other component, a certain component will be understood that no other component exists between them.

The terms used in this application do not intend to limit this invention, but are used only to explain specific implementation examples.

The singular expression includes plural expressions unless it is apparently different in the context.

The terms such as "include", "equipped" or "have" in this application intend to designate that the feature, number, stage, movement, component, part or the combination described in the specification exist.

Therefore, it will be understood that the existence or the additional possibility of one or more than one different features, numbers, stages, actions, components, parts and the combination is not excluded in advance.

Unless differently defined, all the terms used here including technical or scientific terms have the same meaning with what is generally understood by one who has common knowledge in the technical field that this invention belongs to.

The terms such as those defined in the dictionary commonly used will be interpreted to have the meanings matching with the meanings in the context of the related technologies. Unless clearly defined in this application, they are not interpreted as ideal or excessively formal meanings.

The desirable implementation examples in accordance with this invention are explained in detail in reference to the drawings attached below. But, the same reference numbers are given to the same or corresponding components regardless of drawing codes and repeated explanations will be omitted.

The detailed description about the prior related technology will also be omitted when it is judged to blur the gist of this invention in explaining this invention.

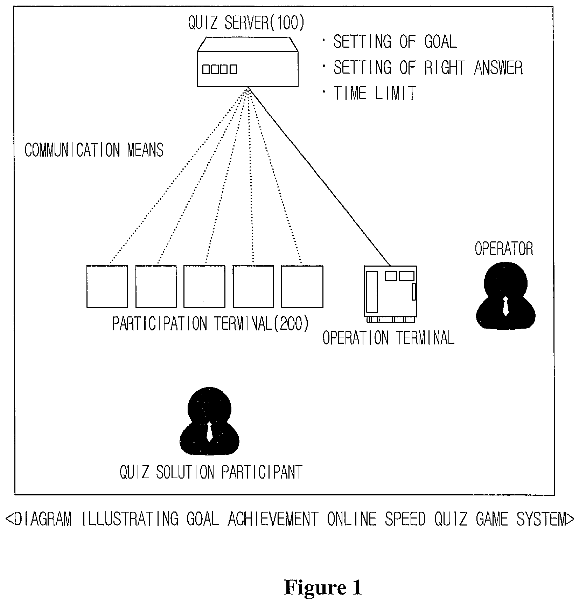

Referring to Figure 1, a quiz server (100) is configured to receive data from a participation terminal by a wire/wireless communication method. In addition, an operation terminal is configured to transmit data necessary for setting a quiz to the quiz server by a wire/wireless communication method. In Figure 1, the quiz server (100), a participation terminal (200), and an operation terminal (300) represent a typical configuration of an online quiz service by communication means such as the Internet. Such configuration is a preferable configuration for a plurality of users.

Although not shown by a separate drawing, it is possible to embody the invention with a simple type of configuration configured only by a participation terminal and a quiz server in a specific space by using RF or Wi-Fi network. In this case, the quiz server is provided with an input means, a quiz operator sets a right answer for a quiz and a goal to be achieved within a time limit through the input means, and has to be configured to set the time limit or input a quiz end signal.

The operation terminal (300) is additionally provided with a display device, and is configured to receive information related to a quiz progress from a server and to express the information. The display can select and display a part of information such as the number of persons with right answer, the number of persons with wrong answer, the number of wrong answer times, the acquired points, and frequently-entered wrong answers, to display an answer progress degree of a speed quiz which is on-going.

Preferably, the operation terminal (300) is configured in types of PCs, smartphones, laptop PCs, tablet PCs, and applications operated therein. In addition, the operation terminal may be configured with a plurality of terminals as function units.

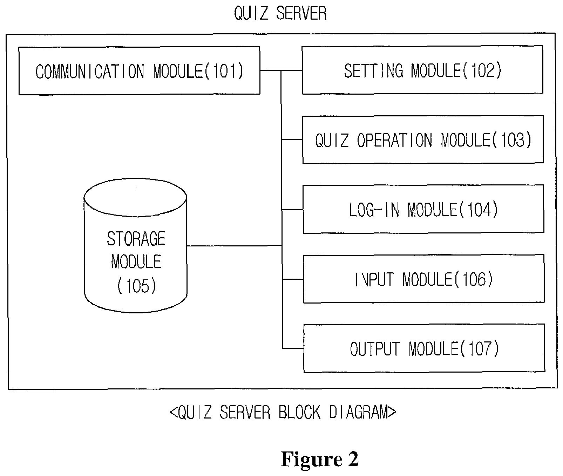

Referring to Figure 2, the quiz server (100) includes a communication module (101) which transmits and receives data to and from a participation terminal, a setting module (102) which sets data such as a right answer, a time limit, or a goal for a specific quiz necessary for quiz operation, and a quiz operation module (103) which determines whether the answer received from the participation terminal (200) satisfies a right answer of a specific quiz, calculates a cumulative value of the number of persons with right answer, the number of persons with wrong answer, the number of wrong answer times, the ratio of right answers, the ratio of wrong answers, and the acquired points, estimates achievement from the above cumulative value, determines a quiz result by comparing the achievement with a goal value, and reflects the quiz result in at least one manner of the first manner of reflecting the quiz result to a specific person or a specific team presenting or explaining the specific quiz or the second manner of reflecting the quiz result to a specific team including a plurality of quiz solution participants.

The quiz server (100) additionally includes a log-in module (104) which generalizes user information and keeps qualification of quiz solution participants, and a storage module (105) which stores various kinds of information.

In addition, the quiz server may additionally include an input module (106) corresponding to a device such as a camera, a microphone, a keyboard, a keypad, and a mouse, and an output module (107) which outputs quiz progress information. The output module of the quiz server (100) may be a display speaker, and the like. Although not illustrated in the drawing, in order to automatically check a time limit of a quiz step, a timer module may be added.

In the quiz server (100), the module may be configured with a single system, and may be configured with a plurality of systems to cope with a plurality of users.

The number of persons with right answer corresponds to the number of participation terminals transmitting an answer satisfying the right answer, the number of persons with wrong answer corresponds to the number of participation terminals which do not input the right answer, and thus they may be replaced by terms with the same meaning in the specification.

In addition, although the name is different, the acquired points are a numerical value which can be represented by the sum of the numerical values acquired by each of plurality of users, and may be replaced by an acquisition amount accumulated in a single quiz step.

In the quiz server (100), the setting of the goal value may be designated by a number thereof or a value of a specific number or a ratio in correspondence with the number of persons with right answer, the number of persons with wrong answer, the number of wrong answer time, and the acquired points for the quiz solution participants.

The quiz operation module (103) is configured to count the number of wrong answers, the number of persons with wrong answer, the number of persons with right answer, and the like for the answers for a quiz problem in a specific step. When a goal value as reference of failure determination is designated as the number of wrong answer times of 1000 in a specific quiz step, the cumulative number of times of inputting wrong answers of quiz solution participants is counted, and it is determined as fail when the counting number exceeds 1000. When the number of persons with right answer is set to 20%, it is determined as success when 1000 participants participate and 200 participants answer the right answer. The goal is set by combining the two conditions together.

When exceeding the time limit for the progressed quiz, receiving a quiz end signal, or inputting a quiz end signal, the quiz operation module (103) ends the reception of quiz answers, and determines the quiz result as success or failure in accordance with whether achieving a designated goal value of the number of persons with wrong answer, the number of persons with right answer, the number of wrong answer times, and the acquired points of the quiz or not.

The determination of the quiz result by the quiz operation module (103) is preferably performed by discrimination of success and failure, but various types can be applied such as determination by ranking of achieving relative achievement within a time limit or determination by ranking of the time needed for achieving the same goal.

When a professional operator is disposed such as TV show, it is necessary to provide an alternative plan such that the operator directly designates a quiz result instead of automatically determining the quiz result in the quiz server.

The operation terminal (300) is provided with a means for inputting a quiz result of determining success or failure of a quiz challenge in a specific quiz step and, when the operator directly selects or inputs the quiz result, the operator terminal (300) transmits the quiz result to the quiz server (100).

The quiz operation module (103) of the quiz server (300) may be replaced by a step of using the quiz result received from the operation terminal.

The quiz operation module (103) reflects at least one method of score grant, score reduction, disqualification of participation, suspension of participation qualification, and restoration of participation qualification with respect to a specific person or a specific team on the basis of the quiz result. In addition, it displays the quiz result on the display or transmits to the operation terminal or the participation terminal.

When the quiz operation module (103) reflects the score for the success result, differential scores may be granted in accordance with the time taken to achieve a designated goal in the same condition, equal scores may be granted to all persons or teams related to the quiz result, and the score of the other person or the other team may be transferred to scores of a specific person or a specific team.

The log-in module (104) maintains access information including IDs for specifying and identifying each of the participation terminals or quiz solution participants to cope with a case where a plurality of quiz solution participants use participation terminals.

The log-in module (104) is configured to use one or both of two manners of discrimination by combination of IDs or passwords of the quiz solution participants, or discrimination by Ids of the participation terminals themselves. Team information may be added to the access information as necessary, and the number of entire connected persons or the number of team unit connected persons can be figured out frequently.

In order to provide a team unit speed game, the log-in module (104) additionally manages team information. Related information such as a team name, the number of team members, a team score, or participation qualification is managed as the team information. Preferably, information about the quiz success step of the team may be added.

The participation terminal (200) can convert the input into a simple text input or the number or sign of the answer selected by the quiz participant in multiple choices and transmit it to the quiz server, and further makes the input such as gestures, photos, position information, and voice of the user into data, and may transmit the data.

When the participation terminal transmits the information such as images, gestures, texts, and videos, the quiz operation module (103) of the quiz server (100) has a function of determining a scoring result whether answering the right answer of a specific quiz in correspondence with the format of the answer data. When the right answer is regulated by the form and sound of real clapping, and when a video of clapping is transmitted, an additional module which automatically determines clapping determines the right answer or wrong answer.

The participation terminal (200) additionally includes an output device such as a display and a speaker, and expresses information by using the output device such as the display or the speaker when information related to a quiz operation from the quiz server (100).

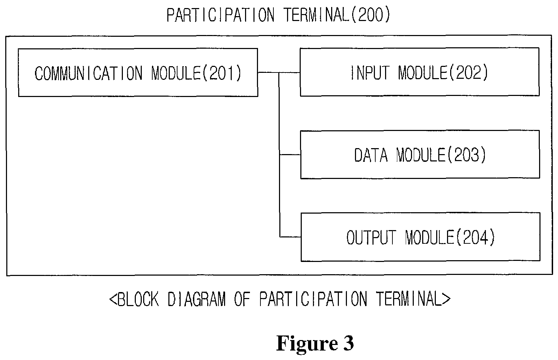

Referring to Figure 3, the participation terminal (200) includes a communication module (201) which transmits an answer in correspondence with the communication module (101) of the quiz server (100), an input module (202) which is used by the user to input the answer, and a data module (203) which converts the answer of the user into digital data to be transmitted.

Additionally, the participation terminal (200) includes an output module (204) which outputs, when receiving information related to a quiz progress status from the quiz server, the information.

An answer input module includes at least one of the input device such as a keyboard, a mouse, a touch pad, a microphone, and an image device. A gyro sensor or a sensor for a special purpose such as detecting gestures can also be included replacing the above input device.

The communication module (201) of the participation terminal may have a reception function in addition to transmission of data, and in this case it can receive information such as a quiz solution, a hint, a quiz progress status, and a quiz result. In addition, when a data expression device such as a display is additionally used, the information is expressed on the display as necessary, thereby further gorgeously configuring the online speed quiz game.

The participation terminal (201) includes a terminal device for a speed quiz game and an application corresponding thereto, or includes a hardware system such as a mobile phone, a smartphone, a tablet PC, and a PC which is the existing widespread personal mobile terminal, and an application which is installed in the hardware system to be executable and is manufactured to include basic functions of the participation terminal.

Although not illustrated in a separate drawing, it is preferable that the operation terminal (300) further includes a communication module, an input module, and an output module. The input module of the operation terminal (300) can additionally perform right answer determination, quiz result determination, and quiz time limit input and the like, and the output module may correspond to a display or a speaker, and is configured to express the quiz progress related data received from the quiz server.

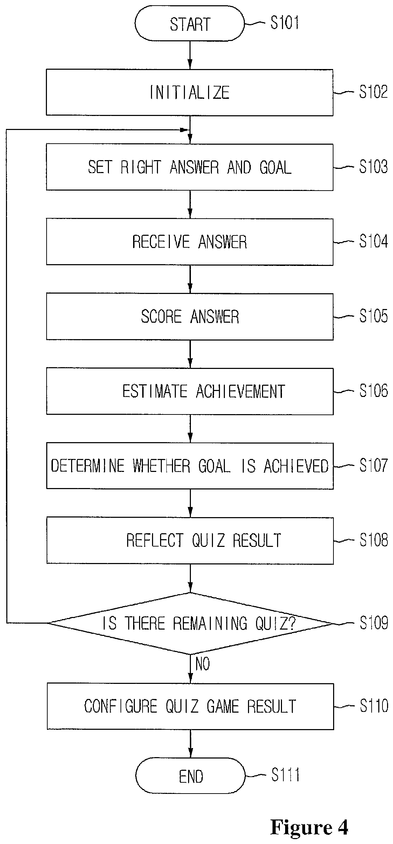

Referring to Figure 4, the quiz server receives data from the operation terminal and the participation terminal, and includes a quiz operation module (103) which is a core module of the online speed quiz game.

The quiz operation module (103) of the quiz server (100) restrictively operates the answer input from the participation terminal. Only one answer may be received from a specific terminal with respect to a specific quiz problem to determine right or wrong, or the answer may be repeatedly received until the right answer is answered.

When a quiz game starts (S101), the quiz operation module (103) performs an initialization step of configuring participants or teams, initializing scores of participants or participating teams, and setting log-in information of connected persons (S102).

Next, a right answer and a goal value for a quiz is set while a quiz game progresses (S103). In this step, a quiz result reflection method and the like is additionally set by combining at least one of methods such as score grant for a time limit related to goal achievement or for achievement and failure of a goal, score reduction, suspension of participation qualification, and restoration of participation qualification or disqualification of participation. The quiz operation module (103) may add and set a function of automatically reflecting a quiz result on the basis of such additional information.

The set answer may be texts, signs, numbers, and the like. Additionally, the answer may be set even as standard of a right answer for determining characteristics of data, such as five smiling persons, a winker, a photo of the sea, sound of applause, and a home appliance photo with the logo of a specific company.

In addition, the answer may be set as a condition of a song title including a word of 'love'.

Alternatively, the answer may be set in a manner of a condition of fitting in specific order, or a complicated condition such as a word which starts from the last letter of the first suggested word of words to be referred in a game such as Word Chain or the last letter of the answer submitted previously and has two or more letters loaded on a specific dictionary DB may be designated as the right answer.

The manner of designating the right answer with the complicated condition format as described above is a manner which is not so welcoming for a game operator. In such a case, a rule of a quiz game may be predetermined, the quiz game may be allowed to precisely proceed, and the operation terminal or the quiz server may be provided with a convenience means for presenting titles of quiz games to select a quiz game from a plurality of quiz games.

A basic value is preset for a right answer of a specific condition format according to a title of a quiz game in the right answer of the condition format. It is preferable that, when the quiz game is selected, a right answer setting portion of basically set detailed condition is displayed and a part thereof is changed. In other words, in a case of Word Chain game, setting of three or more-letter words or five or more-letter words may be set in more detail.

Even when the step of setting the right answer is a condition format or a specific answer, in order to cope with this case, the quiz server has to perfectly have a function of determining whether an answer of a participant is the right answer.

The goal may be designated as a specific number or a relative ratio (percentage or the like) for a quiz solution target with respect to the number of persons with right answer, the number of persons with wrong answer, the number of wrong answer times, acquired points, and the like. It has to be considered to add settings of a time limit, a quiz result reflection method, and the like in the setting step.

The quiz operation module receives an answer of a quiz from the participation terminal until the goal is achieved or the time limit is ended (S104), performs a scoring step of determining whether the received answer satisfies the right answer.

In the scoring step (S105), when the right answer and the wrong answer is determined in accordance with whether the answer satisfies the right answer, the number of persons with right answer and the number of persons with wrong answer are counted. In addition, the number of wrong answer times is counted. The number of persons with right answer and the number of persons with wrong answer mean the number of participated terminal units. When answers are allowed to be input multiple times until answering the right answer, the number of wrong answer times is counted differently from the number of persons with wrong answer.

In the scoring step (S105), points may be granted to the persons with right answer or the persons with wrong answer in accordance with the scoring result of the answers. In addition, the sequence may be changed in a manner of determining whether a cumulative answer is the right answer after firstly performing accumulation based on the answer without firstly performing the scoring step.

The quiz operation module (103) estimates achievement of the quiz step from the counting or the cumulative result of at least one of the number of persons with right answer, the number of persons with wrong answer, the number of wrong answer times, and the acquired points for the specific quiz as described above (S106). The number of persons with right answer and the number of persons with wrong answer are processed in a manner of processing a ratio of persons with right answer and a ratio of persons with wrong answer for a specific team or the entire. In a case of a team challenging a specific quiz, achievement is estimated from the cumulative value for answering activities of members in the team. In other words, the achievement is estimated from a cumulative value of the number of persons with right answers, the number of persons with wrong answers, and the cumulative acquired points by the answering activities of the members in the team. The estimation of the achievement from the cumulative value may directly use the cumulative value, but includes processing through calculation of the cumulative value.

In the step of estimating the achievement (S106), the acquired points are configured in a manner of accumulating scores obtained by the result of the scoring in the scoring step (S105) or accumulating the number of quiz steps of success or failure in goal achievement. Also, it is preferable that the number of persons with right answer, the number of persons with wrong answer, and the number of wrong answer times counted in the scoring step (S105) may be estimated directly as achievement.

In overall specification, the acquired points do not mean restrictively assigning scores or scores to a specific person or a specific team. In other words, the acquired points may be replaced by a broad meaning such as the number of secured symbolic prizes which can be replaced by points. When discriminating superiority and inferiority of the quiz game by the number of times of success and failure in achievement of a goal, the number of success and failure in the goal achievement is also considered as points in a broad meaning.

The quiz operation module (103) performs scoring only for answers transmitted or received within a time limit. It is preferable that the time limit is set in the setting step. In addition, the quiz operation module (103) receives a quiz end signal or information about the remaining time limit from the operation terminal or directly receives it from the input module of the quiz server, the quiz end signal is considered as the immediate end of the time limit, and the remaining time limit information may be replaced by adjustment and setting the remaining time limit.

In the scoring (S105), in the case of designation of signs or numbers, it is determined right or wrong by whether the answer is entirely or partially matched with the right answer. When the right answer is determined by reference of a predetermined condition, the answer is reviewed to determine that it is right or wrong.

In order to cope with the case where it is difficult for the quiz server to automatically compare the answer with the right answer and perform determination, it is possible to configure so that the answer of the quiz server is transmitted to the operation terminal, and the operator may compare the answer with the right answer. When the operator inputs the scoring result for the answer, the operation terminal transmits the scoring result information to the quiz server.

When the quiz server (100) receives the right answer determination result from the operation terminal, the quiz operation module (103) uses the received right answer determination result. In this case, even when the quiz server receives the right answer determination result over the time limit, and when the time of receiving the answer from the quiz terminal to the quiz server is not over the time limit, the quiz server determines it as being valid.

When the operator performs right answer determination for the answer received by the quiz server by using the operation terminal, the operation terminal includes an operation terminal for right answer determination as a separate device or includes a plurality of operation terminals and uses the terminal or terminals only for right answer determination, a plurality of operators taking in charge of only right answer determination participate in the right answer determination to reduce the time for the right answer determination, which is a preferable method.

The quiz result is determined by absolute standard of success or failure in accordance with whether the achievement obtained by accumulating a right answer determination result or a scoring result for a specific quiz achieves the goal in the quiz step, or determination (S107) is performed by relative reference from raking of succeeding in goal achievement or acquired points, and the quiz result is reflected to a specific person or a specific team (S108).

In the step of reflecting the quiz result, the quiz result is reflected to a specific person or a specific team playing a role of presenting or explaining a specific quiz. In addition, in accordance with a specific team including a plurality of participants for a specific quiz achieves a goal for a specific quiz, the quiz result is reflected to the above specific team.

The step of reflecting the quiz result to the specific team is configured by at least one of the first manner of representatively reflecting a quiz result to a specific team and the second manner of reflecting a quiz result to participants belonging to the specific team. In other words, a manner of collectively adding and subtracting the corresponding score to the members of the team, and restoration or disqualification of a status of participants belonging to the specific team may be determined.

As a manner of reflecting the quiz result, at least one manner of the first manner of adding and subtracting scores with respect to a specific team or specific participants which are a reflection target in accordance with success or failure of the quiz result, the second manner of adding the number of times of goal achievement of the quiz step, the third manner of designating a prize through lottery, the fourth manner of determining elimination of participation qualification of quiz solution, the fifth manner of storing a quiz result in a storage device, the sixth manner of transmitting a quiz result through a network, and the seventh manner of outputting a display or a sound is used.

When a quiz result reflection manner is set in the step (S103) of setting a right answer and a quiz goal, it is preferable to automatically reflect the quiz result in correspondence thereto.

When the goal of the quiz step is a relative goal of achieving more than a specific person or a specific team, the goal setting may be omitted. For example, in a case where five teams, each including 100 persons, challenge one quiz solution, when a quiz result is reflected as ranking such as a right answer ratio and sequence of the teams with the cumulative number of right answers after a predetermined time, the goal setting may not be necessary. In addition, even when it is considered as success when all the persons implicitly answer the right answer and the quiz result is estimated by achievement time, the goal setting is not necessary.

In the setting step (S103), the reflection method is set when the operation terminal receives data additionally indicating the reflection method of the quiz result, and the quiz result is reflected in accordance with the set reflection method. For example, when the quiz operator sets to add scores of a specific person through the operation terminal after determining the quiz result, the quiz operation module (103) reflects the quiz result by determination based on the setting.

When the manner of reflecting the quiz result is the adding or subtracting of scores, the scores for the specific participant or the specific team are added or subtracted.

As another manner of reflecting the quiz result, there is a manner of accumulating the number of times of success or failure in goal achievement with respect to a specific participant or a specific team. Superiority and inferiority of a quiz game are determined from the order of such cumulative values.

Another manner of reflecting the quiz result may be a manner of disqualification of participation or restoration for a specific quiz step. Elimination from the quiz game may be interpreted as disqualification of participation for all the specific quiz steps remaining in the future.

In addition, the quiz result may be reflected in a manner of selecting a prize designator through lottery from quiz result reflection targets, or displaying the quiz result on a display. The quiz result may be reflected by a method of storing the quiz result in a specific recording medium or transmitting the quiz result through a network.

If there are more quiz steps to be performed, the step is switched to the next quiz, moves to the step (S103) of setting a right answer and a goal, otherwise the progress of all the quiz steps of the online speed quiz is ended.

When the quiz game is completely ended, effective information of survivors, surviving teams, scores, ranking, score ranking of each team, top rankers, and the like is processed to configure result information of the quiz game, then the information is transmitted to the participation terminals or the operation terminal or is displayed on the display (S110), and the quiz game is ended (S111). Of course, it is natural that it is possible to see the intermediate ranking in a step in which the quiz game is not ended.

In a flowchart illustrated in Figure 4, in the step of configuring the quiz game result (S110), when there is no remaining quiz, it is described that the quiz game is finally ended. However, it is preferable that, when the operator receives a command to end the quiz game from an operation console, the quiz game result is configured even when there is a remaining quiz step. In addition, even when the quiz game is not finally ended, ranking announcement may be performed in the middle of the quiz game. In other words, the method may further include a step of generating the accumulated quiz game result after operating various steps of quiz game in which the specific persons or the specific teams participate, and the result is announced as the intermediate result to stimulate competitive sentiment among quiz game participants.

When there is no separate operation terminal, result information is displayed by using an output device such as a display mounted on a quiz server itself by using texts, tables, graphs, images, and the like.

Each participation terminal processes the result information by using information such as the final score or the final ranking of the quiz solution participant, and transmits the result information to the corresponding participation terminal. As necessary, ID, name, ranking, scores, and the like for the final top ranker are configured as result information, and transmitted to the participation terminal and the operation terminal.

The flowchart illustrated in Figure 4 is a flowchart for reference for a preferable configuration of the speed quiz game, and several orders may be changed for development in actual development. For example, the setting may be performed just before right answer determination after receiving all answers for a quiz problem.

In addition, the method may further include a step of regulating quiz solution targets who has to solve a quiz before entering each quiz step, and may preferably include a step of allowing only specific targets to participate in the quiz solution, such as the number of members of a specific team, survivors in a survival format, and dropouts (only for repechage) in a survival format. This step may be departmentalized into a step of configuring a team, a step of determining participants only for survivors, and the like.

When the quiz server is operated to allow a plurality of users to operate a quiz game, it can be considered that the quiz operation module (103) additionally include a quiz channel which can independently perform a quiz game. In order to provide the quiz channel, a participation terminal user is allowed to participate in a quiz game of a specific channel, and the quiz operation terminal has to be jointly configured to correspond to the specific quiz channel. In other words, access information of the participation terminal is managed, information for the participation channel is managed, and a quiz progress status is managed for each channel, as additional configurations.

An embodiment of the invention is a quiz game in which plurality of users participate in all quiz operation steps and a specific person explains a quiz solution. In the embodiment, a specific person appears on TV in a TV quiz show and explains a presented right answer, and viewers download an application for quiz solution participation, install the application in smartphones or PCs of themselves, and participate in the quiz.

The viewer as a quiz solution participant transmits an answer through the participation terminal (200) such as viewer's smartphone, tablet PC, and PC.

The specific person is a performer of a TV show. Each performer receives one presented word as a quiz, and explains about the word for the viewers to answer the right answer for the quiz. In a case of a quiz game in a score competition manner, a service is configured such that each performer gets a score when succeeding in the quiz game and loses a score when failing. Alternatively, the number of success times and the number of failure times may be accumulated and compared to determine superiority and inferiority. In a case of a quiz game in a survival manner, the performer survives when the performer succeeds in a quiz step, and may drop out when fails.

In the embodiment, a viewer is a quiz solution participant, and a performer of a TV show is a quiz game participant. The viewer installs an application for quiz solution participation in a smartphone, and watches the TV broadcasting. Herein, the smartphone is a participation terminal. Instead of the smartphone, a remote controller or a digital set top box of a smart TV may be replaced as the participation terminal.

The TV performer receives a presented word in performer's order. The presented word is set in the quiz server as the right answer, and the terminal of the quiz solution participant is connected to the quiz server through a network. The quiz server (100) confirms the number of persons participating in quiz solution, and can receive an answer from the participation terminal.

In order to determine whether a goal is achieved at the same ratio as a ratio of persons with right answer or a ratio of persons with wrong answer, the quiz operation module (103) of the quiz server (100) calculates and compares the number of persons with right answer and the number of persons with wrong answer with reference to the entire participants or the entire answering persons. A manner of predetermining a specific ratio of number for the entire participants and comparing the number with the number of persons with wrong answer or the number of persons with right answer may be used. In case of increase or decrease in the number of participants during the progress of the quiz, the number of population for appropriately acquiring a ratio may be modified and used.

The quiz server (100) may be positioned at a position with easy connection in addition to IDC or broadcasting station. In this case, in the broadcasting station, an answer, a goal, and a time limit may be set to the server by using the operation terminal (300).

The answer may be transmitted and set to the server, and the operator may directly set the answer to the server. The goal is set in correspondence with at least one number of the number of persons with right answer, the number of persons with wrong answer, the number of wrong answer times, and acquired points, and may be represented by a specific number or a ratio for targets. In addition, the goal value may be designated even by the number of wrong answer input times.

It is preferable that the time limit is set at the start portion of each quiz step. The operator may transmit a stop signal by using the operation terminal without setting a time limit, or the operator may directly input a time limit in the quiz server (100).

When the viewer inputs an answer to the participation terminal (200), the participation terminal (200) converts the answer into data and transmits the data to the quiz server. The quiz server (100) receives the answer from the quiz terminal (200), determines whether the answer satisfies a preset right answer, and estimates achievement of the quiz step. It is general that the achievement of the quiz step is calculated by counting the number of persons with right answer, the number of persons with wrong answer, and the number of wrong answer times or accumulating the acquired points acquired by each participant, but various estimation method may be added, such as a manner (e.g. continuous strikes in a bowling game) of further giving a special score when there are continuously right answer persons.

When the goal value is achieved, or the quiz time limit is over, or the quiz end signal is received from the operation terminal, the quiz server ends receiving of the quiz answer from the participation terminal, and the quiz game participant determines success or failure of the quiz result of the quiz step.

Even when it is within the time limit or the end signal is not received, the receiving of the quiz answer may be ended when the success or failure of the quiz result is confirmed.

When the quiz result is a success, a score is given to the quiz game participant, thereby reflecting the quiz result. In addition, a score is given to persons who answered the right answer or a gift target is selected through lottery, thereby reflecting the quiz result. The quiz server (100) transmits information related to the reflection of the quiz result to the participation terminal, or informs the persons related to the quiz game through TV screen.

In reflecting the quiz result, a time taken to achieve a goal value or a goal value achievement degree may be evaluated or compared among competitors to differentially give or reduce scores.

The quiz operation module (103) determines the quiz result by preferentially comprising at least one of the number of persons with right answer of the target participants, the number of persons with wrong answer, the number of wrong answer times, and acquired points with the goal value. In addition, selectively, when the number of wrong answer input times reaches a predetermined goal value, it may be determined as failure. The determination method may be changed and applied in accordance with the rule of the game.

A display function of the operation terminal is configured such that the performer can see answers transmitted by persons with respect to performer's explanation. The quiz operator may command the quiz server to disclose several wrong answers through a TV screen by using the operation terminal or to transmit related information to the participation terminal. The quiz server (100) additionally has a function of transmitting the related information to the participation terminal, and the participation terminal additionally has a display function of displaying the related information.

In the quiz broadcasting of the embodiment, one performer explains to viewers within one given minute such as 10%, 20%, 30%, 40%, 60%, 80%, and 90% stepwise, and wins a prize when passing through all the steps while continuously raising the goal value.

In addition, as another online speed quiz game method, a plurality of performers constitute each team, viewers select a performer to divide teams, and it is possible to configure a team competition quiz.

The viewer listens to the explanation of the performer of the team to which the viewer belongs and inputs an answer, and the viewer receives a team score when the quiz step is determined as success.

In addition to giving of the team score, it is preferable to give a score to the team member of the team or the quiz solution participant who answers the right answer about the quiz solution. A plurality of quiz steps may be added, a goal value, difficulty of a presented word, distribution of marks, and the like may be adjusted for each step, and the competition of teams is allowed to continue.

The quiz operation module (103) is configured to manage wrong answer information obtained by wrong answers. The quiz operation module transmits the information such as the kinds of wrong answers, the number or ratio of reception times for each wrong answer, and the number of participants to the operation terminal. The operation terminal displays the information about the right answer input status of users through a display by texts, images, graphs, tables, and the like.

As another embodiment of the invention, a configuration of a speed game in which a plurality of groups is opposite to each other may be described. The system may be configured by assuming a progress of a speed quiz show of five classes. When a laptop PC of a teacher plays a role of a quiz server, a separate operation terminal may not be necessary. Instead thereof, a question, an answer, or a time limit may be set through an input device of the quiz server, or a stop signal input or the like may be instructed. The quiz server (100) confirms the number of connected students by using a communication module. The quiz server manages the connection information of the connected students, and confirms the number of participants for each team. In addition, the connection information of students includes team configuration information. The connection information of the participation terminals may include ID value, team information for classifying students or participation terminals, score information, and the like.

When the teacher inputs a quiz solution and inputs quiz start, the quiz server (100) transmits the quiz problem to the participation terminals by using the communication module. The participation terminal displays the received quiz solution, and waits for quiz answer input of the student. When the students input the answer for the quiz, the participation terminal transmits the data to the server by using the communication module. The participation terminal may include combination of smartphones of students and an application which can be installed in the smartphones, or combination of a PC and an application configured to perform a participation terminal function in the PC.

The quiz server (100) receives the answers input from the participation terminals through the communication module (101) by the students. When the quiz serer (100) receives the answers, the quiz server (100) determines whether the answers are matched with the preset right answer and confirms the team information to count the number of persons with right answer of the team, the number of persons with wrong answer, the number of wrong answer times, and the like or to accumulate the acquired points for each team, thereby estimating achievement of a specific quiz step. Alternatively, achievement may be estimated by determining whether each kind of answer satisfies the right answer after accumulating the answer for each kind.

When the teacher inputs quiz end, the quiz server ends the answer reception, and determines the quiz result as success or failure from whether each team achieves the goal or not. The achievement of the goal may be determined as failure when it is over the number of failure times, and may be determined as success when the number of succeeding persons achieves the goal value and as failure when the number does not achieve the goal value. As a method similar thereto, various methods for determining failure and success may be added.

The quiz server reflects the quiz result by adding or reducing scores to or from the team. In order to more variously configure the quiz operation method, a specific team may select an option of taking the score from the other team. In this case, it is preferable that, when the specific team succeeds in a quiz step, the quiz server reduces the score of the other team and transfers the score to the specific team.

As another embodiment of the present invention, there is a quiz game of competition among a plurality of schools. It may be assumed that students of the schools belongs to each school team and participate in an online speed quiz game. A quiz is described to the terminals, the students receive a quiz solution by using smart phones on line, and the entire participants solve the quiz. The quiz server receives answers of the students within the time limit. A team having a person falling within the first 20 students of the students in order of inputting the right answers is determined as success, and a team having no student falling within the first 20 students inputting the right answers is determined as failure.

In scoring of the determination result, scores are given to each school in proportion to the number of students who input the right answer within the first 20 students. When all the quizzes are completed, the school ranking is transmitted to the operation terminal and the quiz terminals, and the quiz game is ended.

In addition, by slightly modifying the embodiment, it is possible to configure a quiz step in a manner in which schools competes with each other for the number of students with right answers of the schools within the limited time. For example, a quiz game can be assumed in which students of each school solve a quiz solution within the time limit of 60 seconds, and compete for the number of students with right answer within 60 seconds.

The quiz operation module (103) of the quiz operation server (100) configures students for each school as a separate team, and counts the number of persons with right answer to derive achievement. For example, when four schools challenge a quiz game, the goal achievement is determined as a relative value. In other words, the quiz result is determined on the base of whether the number of persons with right answer is more than that of the other team as a relative achievement indicator, and differential scores are given from the ranking of achievement within the time limit or difference in achievement or participation qualification is changed, thereby reflecting the quiz result. The quiz result in the case is not success or failure, but is relatively determined such as difference of ranking or achievement.

In addition, by slightly modifying the embodiment, it is possible to configure a quiz step in a manner in which schools compete with each other in accordance with whether the achievement speed of students of the schools for the designated goal value. For example, a quiz game can be assumed in which the persons with right answer of 20% is set, each school solve a given quiz solution, and competition is performed on the basis of the achievement speed of the goal value of 20%.

The quiz operation module (103) of the quiz operation server (100) configures students of each school into a separate team, separately counts the number of persons with right answer for each team to estimate achievement, and measures the time required for each team to achieve the designated goal. For example, when four schools challenge a quiz game, the time limit is determined as a relative value which has to be faster than the opponent team. In other words, the quiz result is determined by the relative time limit in which a team has to achieve the same goal faster than the other team, and differential scores are given from the ranking or difference in achievement of the goal or participation qualification is changed, thereby reflecting the quiz result. The quiz result in this case is not success or failure, but is relatively determined such as difference of ranking or achievement.

## Claims

1. A goal achievement online speed quiz game providing method in an online speed quiz game which is provided to quiz solution participants who use participation terminals, comprising:
a step of setting, by a quiz server, a right answer of a specific quiz;
a step of receiving, by the quiz server, answers for the specific quiz from the participation terminals;
a step of determining, by the quiz server, whether the received answers are the right answer;
a step of calculating, by the quiz server, a cumulative value including at least one of the number of persons with right answer, the number of persons with wrong answer, the ratio of persons with right answer, the ratio of persons with wrong answer, the number of wrong answer times, and acquired points, and estimating achievement from the cumulative value;
a step of determining, by the quiz server, a quiz result from whether the achievement achieves a specific goal; and
a step of reflecting, by the quiz server, the quiz result to a specific person or a specific team by at least one manner of the first manner of reflecting the quiz result to a specific person or a specific team explaining or presenting the specific quiz and the second manner of reflecting the quiz result to a specific team including a plurality of quiz solution participants who have to solve the specific quiz.

2. The goal achievement online speed quiz game providing method as claimed in claim 1, wherein the step of reflecting, by the quiz server, the quiz result to a specific person or a specific team comprises at least one manner of the first manner of giving or reducing scores of a specific person or a specific team, the second manner of disqualifying from participation, temporarily suspending participation qualification, or restoring participation qualification with respect to a specific person or a specific team, the third manner of determining a gift supply with respect to a specific person or a specific team, the fourth manner of transmitting the quiz result to the quiz terminal or the operation terminal, and the fifth manner of displaying the quiz result through an output device of the quiz server.

3. The goal achievement online speed quiz game providing method as claimed in claim 1, further comprising a step of generating, by the quiz server, accumulated quiz game results after operating various steps of quiz game with respect to the specific person or the specific team.

4. The goal achievement online speed quiz game providing method as claimed in claim 1, wherein in the step of determining whether the received answers are the right answer, when a right answer determination result is received from the operation terminal, the received right answer determination result is applied to be processed.

5. The goal achievement online speed quiz game providing method as claimed in claim 1, wherein in the step of determining the quiz result, when the quiz result is received from the operation terminal, it replaces the determination process by means of the quiz result received from the operation terminal without directly determining by means of the quiz server.

6. The goal achievement online speed quiz game providing method as claimed in claim 1, further comprising a step of setting, by the quiz server, a time limit or setting, by the quiz server, the goal.

7. The goal achievement online speed quiz game providing method as claimed in claim 1, further comprising a step of generating, by the quiz server, the result information of the quiz game when all of the quiz games are ended with the respect to the plurality of quiz steps and transmitting the result information to the operation terminal or the participation terminal or displaying it thereon.

8. A goal achievement online speed quiz game providing system which provides an online speed quiz game to quiz solution participants who use participation terminals, comprising:
a participation terminal which is connected to a quiz server through a network means, and transmits, when the quiz solution participant inputs an answer, the answer to the quiz server through a network; and
a quiz server which allows online access of the participation terminal, sets a right answer for a specific quiz, receives an answer from the participation terminal, determines whether the received answer is the right answer, calculates a cumulative value including at least one of the number of persons with right answer, the number of persons with wrong answer, the number of wrong answer times, and acquired points, estimates achievement from the cumulative value, determines a quiz result from whether the achievement achieves a specific goal or not, and reflects the quiz result in at least one manner of the first manner of reflecting the quiz result to a specific person or a specific team explaining or presenting the specific quiz and the second manner of reflecting the quiz result to a specific team including a plurality of quiz solution participants participating in the specific quiz.

9. The goal achievement online speed quiz game providing system as claimed in claim 8, further comprising an operational terminal for receiving a right answer and a goal, transmitting them to the quiz server, receiving a stop signal or a limit time, and transmitting it to the quiz server, wherein the quiz server stops an answer reception when the stop signal is received, and sets the right answer and the goal in the quiz step when the right answer and the goal are received.

10. The goal achievement online speed quiz game providing system as claimed in claim 8, further comprising an operation terminal for transmitting right answer determination information to the quiz server when the right answer determination information is inputted by an operator, wherein the quiz server receives the right answer determination information from the operation terminal to be applied.

11. The goal achievement online speed quiz game providing system as claimed in claim 8, further comprising an operation terminal for transmitting a quiz result to the quiz server when quiz result information is inputted by an operator, wherein, when the quiz server receives the quiz result from the operation terminal, the received quiz result is applied to be processed.

12. The goal achievement online speed quiz game providing system as claimed in claim 8, further comprising an operation terminal for outputting result information related to a quiz progress received from the quiz server to an output device such as a display or a speaker.
